# EUROPEAN PATENT SPECIFICATION

(11) **EP 3 119 208 B1**
(45) Date of publication and mention of the grant of the patent: **06.12.2017**
(21) Application number: 15717635.5
(22) Date of filing: 17.03.2015
(51) Int. Cl.: A22C 17/00, B02C 18/30

(54) **IMPROVED METAL SURFACES ANTI-RUB APPARATUS**
VERBESSERTE ANTIREIBUNGSVORRICHTUNG FÜR METALLOBERFLÄCHEN
APPAREIL ANTI-FROTTEMENT AVEC SURFACES MÉTALLIQUES AMÉLIORÉES

(30) Priority: 20.03.2014 IT RM20140143
(43) Date of publication of application: 25.01.2017
(73) Proprietor: Evolution S.r.l., 40069 Zola Predosa (BO) (IT)
(72) Inventor: QUADRANA, Marcello, I-40069 Zola Predosa (BO) (IT)
(74) Representative: Fiammenghi, Eva
(86) International application number: PCT/IB2015/051937
(87) International publication number: WO 2015/140705

(56) References cited:
- US-A1- 2012 261 501
- US-A1- 2012 286 077
- US-A1- 2013 284 835
- US-B1- 8 257 148

## Description

### Technical field of the invention

The present invention refers to a new and highly innovative metal surfaces anti-rub apparatus, to be applied to the components of the plants for the industrial production of vegetables, flours and cold meats/salami and more precisely plants for the industrial production of sausages like mortadella, with the aim of reducing friction between the cutting blades or knives and fixed discs, so as to reduce, up to eliminating, the contents of metal material in the processed product. Said metal content is caused by the rubbing of the surfaces of the aforementioned components involved in the process for processing the animal meat.

### State of the art

Sausages are a particular type of cold meats/salami mainly made up of a wrapping which can be natural, like intestines or any other membrane of swine or bovine innards, or artificial like webs, plastic films etc., and contents in the wrapping generally formed by minced meat - pure swine meat or swine meat mixed with other kind of meat, and fat added with other condiments, additives, aromas and pistachios. Sausages are generally divided into: fresh sausages, like pork sausages, seasoned sausages like salami, and cooked sausages like wurstel, soppressata, cotechino and mortadella. The latter definitely falls among the most sold and consumed cold meats/salami worldwide.

Mortadella is a pink-coloured and slightly spiced cylindrical or oval-shaped cooked sausage. In the past, mortadella was produced using meat of various animal species including, swine, bovine and equine meat and it was considered a prestigious product given the difficulty of its production process and the length of the production apparatus which made it rather expensive.

Over the last years, the technology for producing this type of sausage has progressed considerably and mortadella is currently a product exclusively constituted by noble cuts of swine meat and it is prepared following a precise process.

The process for producing mortadella is known and absolutely particular.

The modem technology provides for that the fresh meat arrives to the production factory in separately frozen anatomic swine cuts. This meat is frozen and after reaching an ideal temperature for the processing thereof, it is minced and reduced to a creamy emulsion through various steps in special meat mincing machines. Fat cubes measuring about one cubic centimeter obtained from the neck fat, the hardest and most prestigious of fats, and lard coming from the dorsal part of the swine, are prepared separately. The thin meat emulsion is thus mixed with the fat cubes and mixed with salt, water and spices such as pistachios, or powder/in solution aromas. In addition, additives are added subsequently and the mixture thus obtained is stuffed at the desired amounts. Actually, there are types of mortadella of different sizes i.e. from 500 g up to more than 100 Kg. The intestines used for stuffing may be natural or artificial and the latter are usually used for smaller sizes.

In addition, the sausage is subjected to cooking using special dry air stoves, for periods of time ranging from a few hours to a full day depending on the size and it is important that the internal temperature reaches 70°C.

Then, there follows douching with cold water and a period of stay in a chiller to stabilize the product. The quality of the sausage and specifically mortadella, mainly depends on factors such as the quality of the raw material used, for example, the composition, the chemical/physical characteristics and the microbiological characteristics, the additives used, storage, distribution of the finished product, and definitely the production technology applied in turn and strictly related to the stress the thin meat is subjected to during the processing.

Though it can be considered cutting-edge, the production technology often reveals drawbacks lying in the need to perform given processing steps by means of components and systems that at times imply problems related to damaging and early wear of the metal components and which directly affect the properties of the finished product. More in detail the necessary and inevitable rubbing of the knives or rotary meat cutting devices with the fixed meat drawing discs, often causes excessive release of high iron content metal material into the product being processed. This rubbing is even more consistent if we consider that some quantities, like the pressure and force, acting on the plant components, are extremely high. The release and presence of these metal substances often cause subsequent oxide reduction mechanisms which occur when these substances come to contact with the meat, degradations which thus alter the final properties thereof. The current knives or cutting devices used are substantially disc-shaped, they rotate around a central axis to which there is imparted a given rotary speed. The cutting devices are constituted by a solid support provided with numerous seats adapted to support a plurality of blades. These may be variously shaped but they are usually rectangular prismatic-shaped.

Each knife or cutting blade is arranged in proximity of a fixed drawing disc, thus generating an alternating sequence of discs and knives which together constitute the cutting group. With respect to their support, the knives are generally arranged so as to have - both in idle condition and operating condition - the front and rear surfaces extended so as to project from the body of the support approaching the surfaces of the drawing discs. This structural and configuration characteristic determines considerable rubbing of the contact surfaces when the plant is operating and more in detail when the passage of considerable amounts of meat determines the development of a high force on the surfaces of the elements involved in the process. The force that is developed is such to deform the support structure or knife and, in addition, it is not uniform on all points of the surfaces given that it is greater in proximity of the central areas of said surfaces. The effect of this aspect determines the formation of concavities in the central area of the surfaces of the fixed discs and knives, which increases the possibility of rubbing between the surfaces as well as continuous maintenance, besides the aforementioned consequences regarding the release of metal material in the product being processed. More in detail, the release of metal material, coming from the components involved in the process, inevitably causes the crushing of the blades of each cutting device with the surface of the underlying and overlying drawing discs and it is caused by the high pressure exerted by the passage of the meat during the processing. The aforementioned drawback cannot be overcome by sufficiently spacing the cutting devices and drawing discs along the central shaft on which they are extended, given that the obtainment of a meat-based emulsion with optimal characteristics for the subsequent processing steps, explicitly provides for that the aforementioned be practically at contact with each other. For the sake of understanding the present invention which will be described hereinafter, it should be observed that during the operation of the current plants for producing sausages, the drawing discs are fixed with respect to the axis of the central shaft, while the knives or cutting devices rotate around their axis and around the central shaft actuation axis. This spatial configuration makes the crushing, deformation and rubbing of the surfaces of the involved components inevitable, following the arrival meat coming from the auger arranged upstream of said components. The auger has a configuration such to have its transverse section parallel to the surfaces of the drawing discs and cutting devices. Thus the passage of meat coming from the auger determines considerable contact between the components, to the point of causing a rubbing capable of causing the consumption of the surfaces of the involved elements as well as the release of the consumed material in the product being processed. Regarding this, the present invention describes an innovative apparatus for preventing the rubbing of the metal components involved in the process for processing animal meat, for producing sausages. Said apparatus is obtained by means of a particular method of assembly of the components and due to devices and solutions such to guarantee the adjacency between the surfaces of the drawing discs and those of the cutting devices, but without the surfaces rubbing or scraping on each other. All this avoiding the early wear of the material constituting said components, as well as the release of metal substances in the product being processed and thus in the finished product.

US 2013/284835 discloses an apparatus for processing animal meat for the production of sausages, comprising along the main rotation axis a plurality of movable components synergistically rotating along said axis such as the actuation shaft, the auger, at least one knife arranged in proximity to the exit of the meat supplied to the auger with a plurality of radial supports all provided with at least one cutting surface called cutting blade and having the thickness of said radial support which is progressively reduced moving away from the center of the knife, said knife being positioned inside the cutting group so that its center position is stably maintained by screwing a nut threaded the end part of the same actuation shaft, said apparatus for processing foods and meat in particular being further provided with a plurality of fixed elements, situated around said central rotation axis, such as a loading hopper, at least one first fixed disc for drawing meat, stably positioned inside the cutting group due to at least one spacer supported by the connection ring nut positioned on the exit end of the ground meat of the cutting group, so that the threaded inner profile of said connection ring nut, is threaded on the corresponding thread obtained on the outer face of the body of the cutting group, so that the screwing or unscrewing of said connection ring nut directly adjusts the pressure exerted by said connection ring nut.

### Field of the invention

The present invention describes a new and innovative mechanical device adapted to drastically reduce the rubbing of the metal surface of the components involved in the process for supplying, processing and producing food products such as legumes, flours and meat in general, cold meats/salami and/or sausages and in particular in the mortadella production process. More in detail, the present invention describes a meat processing apparatus, representing the load portion or loading hopper, the conveying portion or auger, and lastly the processing portion or cutting group, a plant for processing any edible animal meat, intended for producing ground meat and mortadella in particular, adapted to drastically reduce the presence of metal chips or fragments in the processed meat. Said apparatus comprises, more in detail and in orderly sequence, various distinct components such as: at least one hopper adapted to receive the frozen meat supplied to the plant, at least one auger adapted to move said meat from the hopper up to the cutting group, at least one first cutting group provided with a knife on which there are arranged a plurality of cutting blades and at least one first fixed drawing disc, arranged in proximity of said knife. The entirety is assembled so as to facilitate the synergy, integration and reduction of friction between the aforementioned metal components. The present industrial invention patent application, explicitly aims at preventing the cutting group and specifically the knife on which the rotary cutting blades are arranged, under the pressure exerted by the meat supplied to the cutting group by the auger, from deforming and scraping against the corresponding fixed disc. This deformation of the knife is more marked in the central portion thereof, given that it is amplified by the pressure of the actuation shaft. In conventional apparatus, said deformation of the knife, is such to create large surfaces of contact between the rotary cutting blades and the fixed disc, leading to creating overheating, wear of the materials, friction and lastly unwanted jamming. Said jamming and said considerable friction, in particular occur between the cutting surfaces of the single rotary cutting blades obtained directly on the rotary arms of the knife, which move circularly given that they are integrally joined with the central portion of the knife which is in turn stably connected to the actuation shaft due to the central shaped seat. The drawing fixed disc is instead stationary and it is stably locked to the body of the processing device. The technique introduced by the present invention, intends to prevent the occurrence of said unwanted rubbing between the contact surfaces of the aforementioned components, with ensuing wear, jamming and ensuing loss of the metal material in the minced meat. In particular, the knife on which the rotary cutting blades and the fixed drawing disc are obtained, in the present invention, are spatially configured so that their surfaces operate, without rubbing excessively therebetween, one in proximity to the other, by simply touching each other during the normal operation of the plant and thus, during the entire step of processing the meat to be processed. This innovation allows obtaining a processed product, i.e. ground meat and other products for human consumption, totally free of metal remnants produced by the continuous jamming typical of the mechanisms used in the prior art and with ideal characteristics for the subsequent processing steps. The positive effect deriving from the use of the innovative apparatus subject of the present industrial invention patent application, not only lies in the substantial reduction, or even absence, of metal fragments present therein but also in the improved organoleptic characteristics as well as the quality of the finished product which, due to the improved operation of the rotary cutting blades, creates a final product less stressed by the operating step. As a matter of fact, the absence of overheating and unwanted localized friction, prevents the meat being processed from being subjected to heat peaks leading to denaturing the protein present therein, leaving the processed product having a homogeneous light pink color. In addition, the introduced innovative technique allows obtaining an improved general management of the plant in terms of tangibly lesser maintenance required of the various components of the cutting group due to the absence of metal fragments in the finished product. Metal fragments normally caused by the wear of the conventional metal components used in processing the meat. The substantial reduction of the rolling friction, also allows greater durability of the metal components involved in the entire process, allowing an improved performance of the plant and substantial saving in terms of management costs. The early wear of the metal components and specifically of the cutting surfaces used up to date in the prior art, actually requires continuous and constant maintenance of the plant and frequent replacement of the cutting components which are visibly consumed if not entirely worn out after a few hours of use.

Thus, the surprising results obtained by the technique introduced by the present invention improve the efficiency of the entire process for producing the sausages in general and mortadella in particular, more in detail they involve the actuation shaft of the plant, moved directly or through a common kinematic mechanism connected to any motor, the auger adapted to allow the transferred control of the meat introduced into the loading hopper supplying and pushing it at the desired pressure on the cutting components of the plant and the cutting components themselves. Said cutting components are constituted by at least one first rotary device, the knife in this case, directly connected and moved by said actuation shaft. The knife is substantially a rotary and perforated metal disc, provided with numerous radial arms or supports, preferably four radial supports, on which there are directly obtained a plurality of cutting blades provided with a profile with decreasing thickness and also obviously rotary being stably connected to the central portion of the knife. The central portion of said first rotary knife is stably connected with the actuation shaft being provided with a central shaped seat adapted to be engaged on the corresponding shaped seat present on the actuation shaft and it will rotate synergically and at the same number of rotations as said actuation shaft. In the technique described in the present invention, the first rotary knife is arranged close to the outlet point of the meat from the auger. The food products and/or the meat supplied by the auger shall thus be inevitably treated by the blades of said rotary knife. The frozen meat supplied by the auger, energetically impacts the knife to be treated by the rotary cutting blades which are present on each radial arm of said knife. Thus, the meat processed by the first knife encounters the first fixed drawing disc arranged in proximity of said first knife. This fixed disc is substantially a circular and immobile solid surface, provided with a plurality of circular holes and it is arranged in axis with the first knife. However, the first fixed disc is only arranged adjacent to the rotary knife while it is separated from the actuation shaft, due to the presence of a large central hole adapted to be traversed by the actuation shaft. Said first knife is adapted to perform a first operation, referred to as "rough cutting", of the meat or food product to be treated. Each cutting element, constituted by at least one knife and a plurality of cutting blades distributed thereon, is always associated to a corresponding fixed disc provided with a plurality of holes through which the processed meat is drawn. Obviously a first pair constituted by a first knife and a first fixed disc may be followed by a second constituted by a second knife and a second fixed disc and so forth to reach the desired processing level. The second fixed disc, like all possible subsequent fixed discs, is however characterized by having a plurality of circular holes with smaller diameter with respect to those present in the first fixed drawing disc. Naturally it is possible to provide for the presence of a third, a fourth, a fifth pair and so forth of knives and fixed discs, up to reaching the desired meat mincing level. The present industrial invention patent application has the objective of describing and claiming a plurality of devices and components adapted to strongly reduce the friction and deformation of the aforementioned metal surface, i.e., the knives and corresponding fixed discs, when normally operating inside the cutting group. Said devices adapted to drastically reduce friction provide for the introduction of a plurality of axial bearings, conical bearings, spacers, threads, support abutments and sealing gaskets which not only improve but literally revolutionize the operation of the entire cutting apparatus as a whole, preventing the pressure transmitted by the advance movement of the meat to be processed, alongside the thrust exerted by the actuation shaft, from deforming the knife to the point of bending it up to forcing the rotary cutting blades to scrape against the adjacent and respective fixed disc. More in detail, the present industrial invention patent application, describes a device for processing the meat provided with at least one cutting group, constituted by a circular knife provided with a plurality of radial supports and centrally connected, due to the central shaped seat, to the actuation shaft. On each radial support there is obtained at least one cutting blade with decreasing section extending from the centre to the distal termination. Said cutting blades, being stably connected to the knife and the latter being centrally constrained to the actuation shaft, also rotate at the same rotation regime of the actuation shaft and cutting the meat at each step, compressing it in turn so as to push it through the plurality of holes present on the corresponding fixed disc nearby.

The effect intended to be obtained with the innovative technique introduced by the present invention lies in the fact that all single components of the apparatus in question and specifically the cutting components, do not bend and do not deform any more under the heavy workloads. Thus, the aim of the invention is to allow a knife not to rub strongly thereon but simply slide synergically alongside the latter though remaining close at contact with the corresponding fixed drawing disc.

The end result obtained by the apparatus described in the present document, guarantees an actual improvement of the characteristics of the finished product, i.e., it determines a marked reduction of the amount of metal material released by the rubbing of the production plant components, also leading to greater hardness of said components over time, thus preventing frequent maintenance operations.

### Description of the drawings

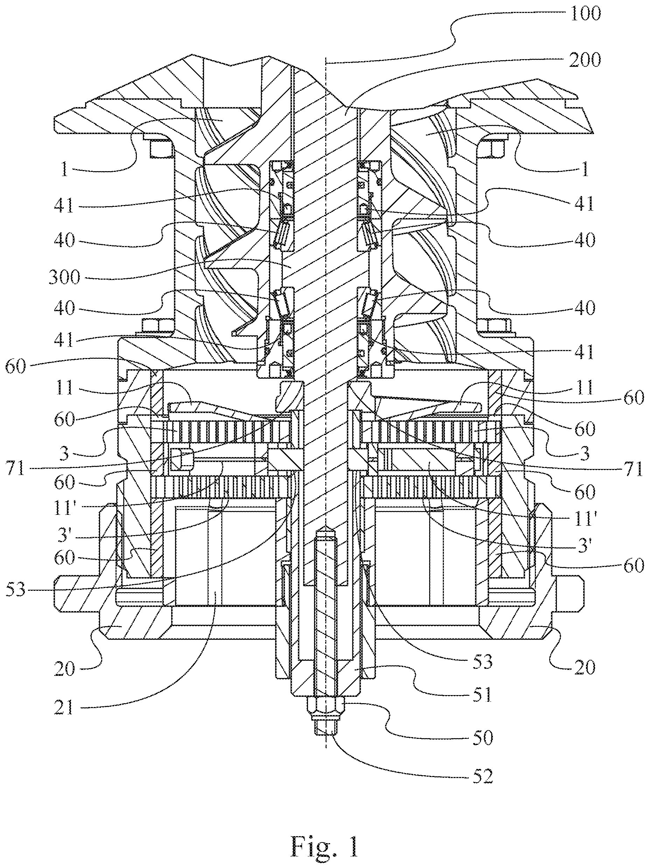

FIGURE 1 shows a longitudinal section of the plant for the industrial production of meat and preferably of mortadella, subject of the present invention. More in detail, Figure 1 shows the view of the auger 1 adapted to transfer the meat being processed from the loading hopper (not shown in the figure) to the various components of the cutting group 55 of the plant in question. The knives 11 and 11' of the cutting group 55, provided with the cutting blades adapted to treat the meat to be processed are observable. The central shaped portion of the knife 11 is inserted and locked abutted in the special grooved seat 71, directly obtained on the actuation shaft 200, so that the entire knife 11, being stably constrained to said actuation shaft 200, rotates synergically with respect to the latter. The grooved seat 71 allows the knife 11 to be stably maintained in position, in abutment, by the pressure exerted at the contact point 53, by the central support or bushing 51. Said bushing 51 is in turn locked and made integral with the actuation shaft 200, by means of the fixing nut 50 which is in turn adjustable and threaded by means of the fixing element 52, at the terminal end of the actuation shaft 200. Figure 1 also shows two fixed discs 3 and 3' stably maintained in the desired position solely by the spacers 60 which also define the preload intended to be applied to each fixed disc. The fixed discs 3 and 3' centrally have a large circular hole, adapted to allow the passage of the actuation shaft 200 and the central support 51 of the knives 11 and 11' therein. The fixed discs 3 and 3' are circular and fixed solid discs maintained in position by the spacers 60 at the front part. Directly acting on the connection ring nut 20 which, in turn pressing on the thrust bearing 21 and on the spacer 60, stabilizes the fixed discs allows the millimetric and stable adjustment of the position thereof and the desired preload of the fixed discs 3 and 3' with respect to the knives 11 and 11'. The spacers 60, the thrust bearing 21 and the fixed discs 3 and 3', due to the millimetric adjustment and the sustainment action carried out by the spacers 60, never come to contact with the rotary device like the central support 51, the knives 11 and 11' and the actuation shaft 200. Only the knives 11 and 11' touch - with the desired and predetermined pressure - the fixed discs 3 and 3'. Figure 1 also shows the presence of at least one conical bearing 40, preferably a pair of conical bearings 40, which by acting on the cylindrical projection 300 present on the actuation shaft 200 allows stabilizing and discharging on the body of the machine the considerable forces which would otherwise affect the shaft 200. As a matter of fact, the bearings 40 prevent the shaft 200, by discharging the forces that traverse the cutting group 55, from deforming the knife 11 up to bending it and colliding with the fixed disc 3. The thrust received by the shaft 200, is substantially due to the action exerted by the advancement of the meat to be processed. The shaft 200 actually receives such forwards thrust by the auger, which is in turn pushed backwards in the direction opposite to that of advancement of the meat to be processed, failure to neutralize which by the circular bearings 40, would be so strong to considerably deform the rotary mechanical members and specifically, the knives 11 and 11' of the cutting group 55. Figure 1 also clearly shows the actuation shaft 200. The actuation shaft 200, when actuated by a common rotary device, being stably connected to the auger 1, receives, from the auger 1, a thrust in the opposite direction with respect to that the auger is subjected to and specifically, it receives a thrust directed towards the direction of advancement of the meat to be treated, and intensity equivalent to the pressure the meat exerts on the cutting group 55. However, this considerable moment is nullified by the presence of at least one circular bearing 40, preferably at least one pair of circular bearings 40. Said circular bearings 40 discharge said considerable thrust, on the metal structure, i.e. on the body of the device in question. This action of lightening the actuation shaft 200 occurs due to the presence of the cylindrical projection 300 arranged on the shaft 200. These devices allow the actuation shaft 200 not to transfer any pressure on the cutting group 55, thus preventing the knife 11 from deforming and scraping against the fixed disc 3. In addition, Figure 1 shows the sealing devices 41 of the lubricant of the conical bearings 40.

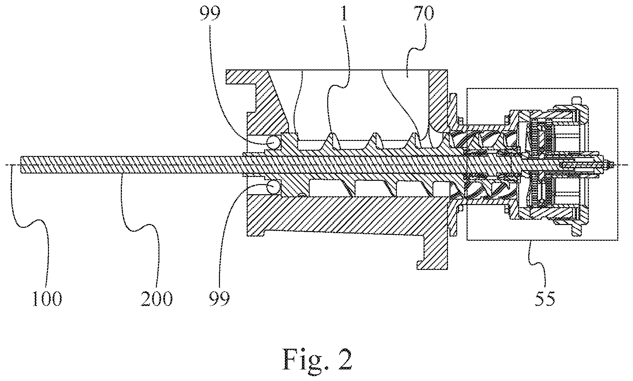

FIGURE 2 shows a cross-sectional view of the entire device according to the present patent application, which shows the hopper 70 through which the frozen meat is supplied to the plant, the auger 1 which transfers the meat at the desired speed from the hopper 70 to the cutting group 55, the entire cutting group 55 and the axial bearing 99 adapted to discharge the backward thrust exerted by the auger on the structure of the machine 1. This thrust is precisely directed in the direction opposite to the advancement direction of the meat, in the direction opposite to the direction in which the cutting group 55 is found, and it occurs when said auger 1, rotating alongside the actuation shaft 200, vigorously pushes the meat to be treated compressing it against the cutting group 55. The axial bearings 99 serve, in association with the circular bearings 40, to nullify the vigorous thrusts exerted on the auger 1, on the shaft 200 and on the knife 3 by the frozen meat when pressed against the cutting group 55 so as to be processed.

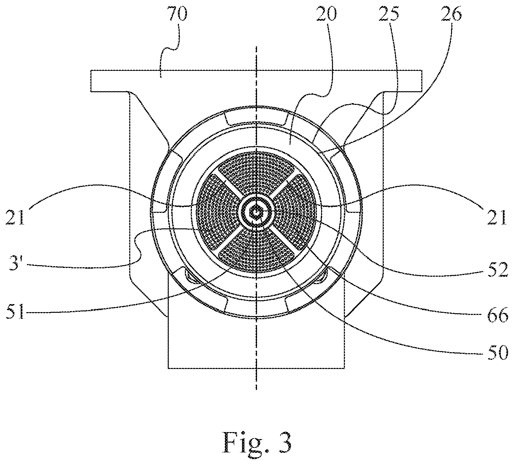

FIGURE 3 is a front view of the device subject of the present invention, which shows the hopper 70, the thrust bearing 21 and the connection ring nut 20 adapted to support, alongside the spacers 60, the fixed disc 3'. The figure also shows the numerous circular holes 66 traversing the central portion of the fixed disc 3'. The threaded inner profile 25 of the connection ring nut 20, is in turn threaded on the corresponding thread 26 obtained on the outer face of the cutting group 55. The screwing or unscrewing of the connection ring nut 20 adjusts the pressure applied to the thrust bearing 21 which in turn supports and stabilizes the fixed disc 3' from whose circular holes 66 the processed product exits.

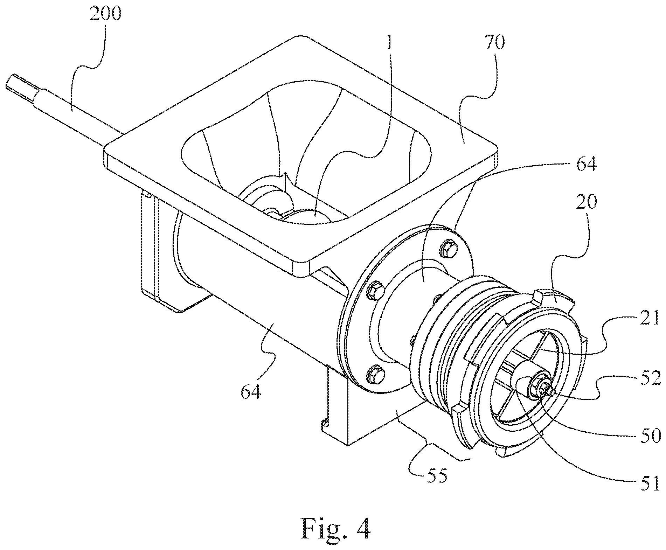

FIGURE 4 shows a complete view of the external of the cutting apparatus according to the present patent application, which shows the hopper 70, the auger 1 adapted to supply the meat to be minced to the cutting group 55 which shows the fixed thrust bearing 21 adapted to stabilize the fixed disc 3 arranged therein (not visible), the fixed connection ring nut 20 adapted to lock and adjust said fixed thrust bearing 21. The tightening force of the fixed connection ring nut 20 is adjusted finely acting directly on the threading which receives its external perimeter. The more it is tightened on the external terminal body of the cutting group 55, the more the fixed connection ring nut 20 shall press on the fixed thrust bearing 21 the more the fixed disc 3 shall be pressed and supported. The pressure to be maintained between each fixed disc and the respective knife is preset and depends on the food to be treated and the size of the used plant. There should be observed the fixing nut 50 threaded on the threaded rod 52 in turn connected with the rotary shaft 200. The rotary elements such as the fixing nut 50, the threaded rod 52 and the rotary shaft 200 do not come to contact with the fixed elements 20, 21 and 3 that surround them in any manner whatsoever. The figure also shows the body of the structure 64 and the central support 51.

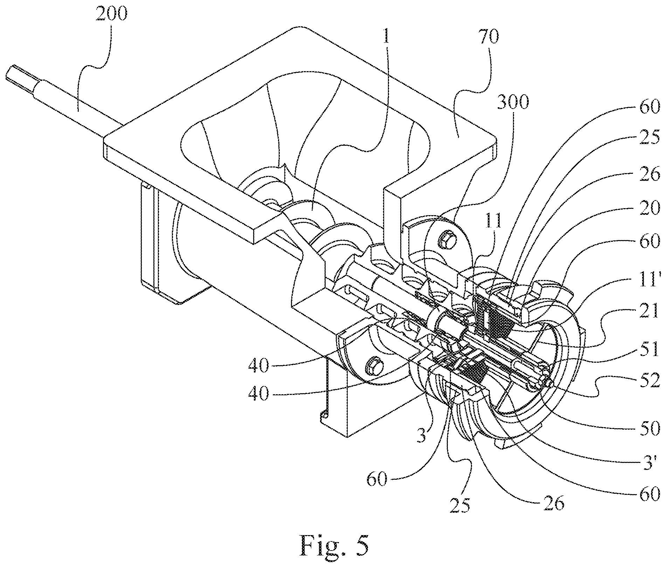

FIGURE 5 shows a view similar to that of figure 4 but providing a cross-section of the entire cutting group 55 which shows the hopper 70, the auger 1, the rotary shaft 200 on which there is arranged the cylindrical projection 300 adapted to stabilize the shaft 200 due to the action of at least one conical bearing 40. The cross-section also shows the knives 11 and 11' arranged between the fixed discs 3 and 3'. The central support 51 adapted to lock the knives 11 and 11' and the nut 50 threaded on the threaded rod 52 adapted to lock said central support 51 are clearly observable. The exploded view also shows how the fixed connection ring nut 20, being engaged with the fixed thrust bearing 21, locks it so as to stabilize and support the fixed disc 3' said fixed connection ring nut 20 being integrally connected, by means of screws (not shown), to the external body of the cutting group.

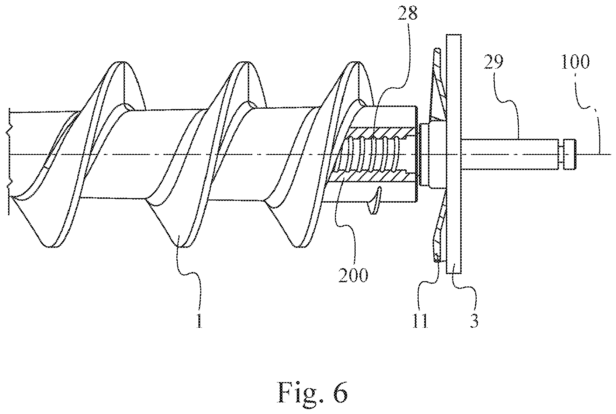

FIGURE 6 shows the alternative system for fixing the knife 11. The knife 11 is inserted in abutment on a special groove arranged on the terminal portion 29. Said terminal portion 29 is in turn threaded, due to the thread 28, on the threaded inner face of the rotary shaft 200. The fixed disc 3, arranged on the same axis 100, is centrally traversed by the terminal portion 29, and it is maintained in position by the fixed thrust bearing 21 and by the spacers 60 (not shown). The fixed disc 3 does not touch the terminal portion 29 and slightly brushes the knife 11 at the pre-established pressure.

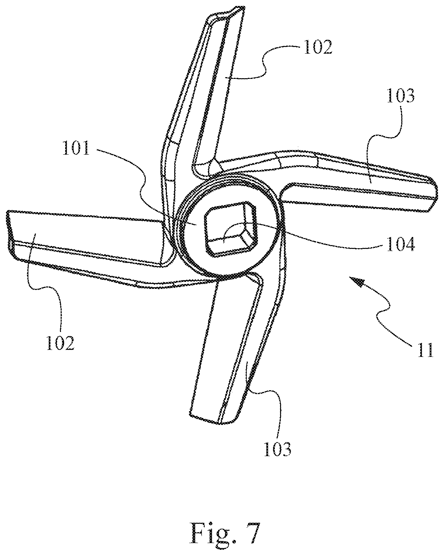

FIGURE 7 shows a front view of the knife 11 according to the present invention, in which it can be observed the central portion 101 in which there is obtained the faceted central seat 104 adapted to be inserted, in abutment, in the respective seat 71 present on the actuation shaft 200 (not shown). The figure also shows the radial supports 103 all provided with at least one filed and sharp surface 102 referred to as cutting blade.

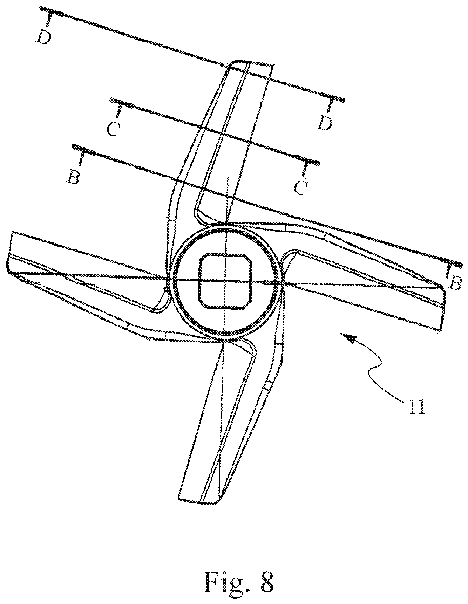

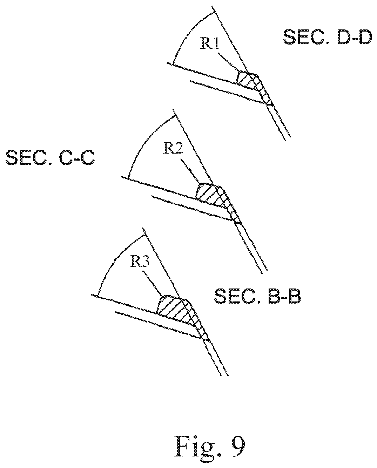

FIGURE 8 shows a front view of the knife 11 according to the present invention, in which there are present - on the radial support - three independent lines, B, C and D which precisely identify the corresponding three sections R1, R2 and R3 shown in Figure 9 which clearly illustrate how the thickness of the section of the radial support 103 is progressively reduced while moving away from the center of the knife 11.
FIGURE 9 shows how the thickness of the radial support 103 varies moving away, along the radial support 103, from the center of the knife 11. In the example shown in the figure, there is a variation of the thickness value of 3.7 along the section B, to a thickness value of 2.6 at the section C, ending with a thickness value equivalent to 1 at the section D.

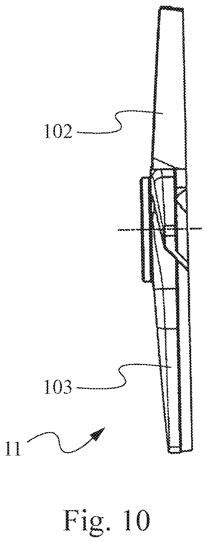

FIGURE 10 shows a lateral view of the knife 11 according to the present invention clearly showing how the thickness of the radial support 103 decreases progressively moving away from the central axis. The figure also shows the cutting blade 102.

### Detailed description of the invention

The apparatus for processing vegetables, flours or preferably for processing the meat for human consumption according to the present invention, is adapted to produce sausages for human consumption and specifically it is preferably studied for producing mortadella, in industrial plants. Said apparatus comprising the following components:
a hopper 70 for loading the frozen meat to be processed;
at least one auger 1 adapted to transfer the substance being processed i.e. the meat, from said loading hopper 70 to the various components of the cutting group 55;
at least one cutting group 55 constituted by a first knife 11, constituted by a plurality of radial supports provided with cutting blades and at least one fixed drawing disc 3 provided with a plurality of holes preferably circular. The cutting group may be constituted by a single duo constituted by a knife 11 and a fixed disc 3, or, a plurality of said duo, all rigorously installed along the axis 100.

The knife 11 is made in a single block provided with a central portion 101 in which there is obtained the faceted central seat 104 adapted to be inserted, in abutment, in the respective seat 71 present on the actuation shaft 200. From the central portion 101 there are arranged a plurality of radial supports 103, preferably four radial supports 103, all provided with at least one filed and sharp surface 102 referred to as cutting blade. Each radial support 103 of the knife 11 according to the present invention, is characterised by a decreasing thickness going from the center towards the periphery. This reduction of thickness is outlined by the three lines present on the radial support shown in figures 8 and 9. These three independent lines, B, C and D precisely identify the corresponding three sections R1, R2 and R3 shown in Figure 9 which clearly illustrate how the section of the radial support 103 progressively reduces while moving away from the center of the knife 11. Said cutting group 55 is adapted to perform both a first division, by cutting, of the material being processed and a first step of drawing the cut meat. Said cutting step occurs through the first knife 11, while the drawing occurs through the first fixed disc 3. There may be provided a second step of processing the meat, subsequent to the first, in which said meat is further cut by the second knife 11' and drawn by the second fixed disc 3'. Obviously, it is possible to have further subsequent treatment steps, adapted to obtain an even more finely treated finished product. The circular drawing holes, present on each fixed disc 3, shall have a progressively smaller diameter passing from the first 3 to the second 3' fixed drawing disc and so forth up to obtaining the desired meat processing level.

All the fixed discs are supported by a thrust bearing 21 and a connection ring nut 20, adapted to directly support the last fixed drawing disc 3. The other fixed discs, possibly present, are always indirectly supported by the thrust bearing 21 and the connection ring nut 20 but due to spacers 60. The latter are represented by solid, preferably metal structures which - resting stably on the thrust bearing 21 and on the connection ring nut 20 - maintain the fixed discs stationary, exactly in the desired position due to the precise screwing torque applied. The spacers 60 stabilize the fixed disc supporting it along its external perimeter, leaving both the circular drawing holes and the large central hole adapted to house the actuation shaft 200. Said first drawing disc 3 is adapted to perform a first operation referred to as "rough cutting" of the animal meat and swine meat being processed in this specific case. The plant described in the present document is configured so that the auger 1 and the cutting device 55 develop rigorously along the central axis 100. The knife 11, or if more than one, knives 11 and 11' may rotate clockwise or anticlockwise with respect to the central axis 100, while the fixed disc or the fixed drawing discs 3 and 3', are always fixed, i.e., they do not rotate with respect to the axis 100 of the plant in question. The knives 11 and 11' of the cutting group 55 are represented by solid, preferably metal structures, provided with openings and characterized by a plurality of radial supports 103, each provided with cutting blades adapted to cut the meat to be processed. The grooved seat 71 present on the actuation shaft 200 is explicitly made to receive, in abutment, the central portion 101 of the knife 11. The knife 11 being provided with a central faceted seat 104 intended to be inserted - in abutment - in said special grooved seat 71 and the latter being suitably faceted and directly obtained on the actuation shaft 200, the entire knife 11, being stably constrained to said actuation shaft 200, rotates synergically with respect to the latter. The faceted seat 104 of the knife 11 is stably maintained in position by the pressure exerted, precisely at the point of contact 53, by the central support or bushing 51. Said bushing 51 is in turn locked and made integral with the actuation shaft 200, due to the fixing nut 50 which is in turn adjustable up to the described torque and thus locked and threaded due to the fixing element 52, at the terminal end of the actuation shaft 200. Thus, the actuation shaft 200, the threaded rod 52 threaded on said actuation shaft, the bushing or fixing element 52 and the fixing nut 50 besides the auger 1 and the knives 11 and 11' are all elements rotating synergically around the axis 100 due to the motion imparted by the rotary shaft 200. The rotary motion of the shaft 200 is guaranteed by the action of a common motor, electrical or of the internal combustion type, arranged on the shaft or connected thereto through a common cascade of kinematisms. The fixed discs 3 and 3' are instead stably maintained in the desired position by the spacers 60 which also define - with the pressure they apply on the perimeter of the fixed discs 3 and 3' - the preload intended to be applied to each fixed disc. The fixed discs 3 and 3' centrally have a large circular hole, adapted to allow the passage both of the actuation shaft 200 and the central support 51 of the knives 11 and 11' therein. The fixed discs 3 and 3' are circular and fixed solid discs maintained in position by the spacers 60 which exclusively press on the outer peripheral portion of said fixed discs. In order to allow the millimetric adjustment of the positioning and desired preload of the fixed discs 3 and 3', it is sufficient to act on the connection ring nut 20 which, by pressing in turn on the thrust bearing 21 and on the spacer 60, stabilizes the fixed discs exactly at the desired position. The spacers 60, the thrust bearing 21 and the fixed discs 3 and 3' due to the millimetric adjustment and the support action performed by the spacers 60, never come to contact with the rotary devices like the central support 51, the knives 11 and 11' and the actuation shaft 200. The knives 11 and 11' which rotate with the actuation shaft 200 in that stably connected thereto, are arranged between the fixed discs 3 and 3' and they touch them with a preset and constant load. The central support 51 is adapted to lock the knives 11 and 11' at the desired position while the nut 50, threaded on the threaded rod 52, is adapted to adjust and lock said central support 51 at the exact desired position. The fixed connection ring nut 20, by being engaged with the thrust bearing 21, locks it so as to stabilize and support the fixed disc 3' said fixed connection ring nut 20 being firmly constrained, through a thread, to the outer body of the cutting group 55. The tightening force of the fixed connection ring nut 20 is finely adjusted by directly acting on the thread which receives the outer perimeter thereof. The more the thread 26, present on the outer face of the cutting group 55, is threaded on the corresponding thread present on the threaded inner profile 25 of the fixed connection ring nut 20, the more said connection ring nut shall press on the fixed thrust bearing 21 on the spacers 60 and thus, the more the fixed disc 3 shall be pressed and supported, conferring greater preload thereto. The rotary elements such as the fixing nut 50, the threaded rod 52, the bushing 51 and the rotary shaft 200 never come to contact with the fixed elements 20, 21 and 3 surrounding them in any manner whatsoever. The cutting group 55 is thus constituted by at least one rotary knife 11 which rotates in proximity of a fixed disc 3. Thus, the problem to be overcome is to stabilize said elements, preventing them from being bent and scraping against each other, under the pressure exerted by the forces involved. The spacers 60, the thrust bearing 21 and the connection ring nut 20 on the one hand, while the fixing nut 50, the bushing 51 and the threaded rod 52 on the other collaborate to prevent the knife 11 from scraping against the fixed discs 3. With the aim of further stabilizing the system, on the actuation shaft 200 there is provided at least one conical bearing 40, preferably at least one pair of conical bearings 40, which acting on the cylindrical projection 300 present on the actuation shaft 200, allows discharging the considerable forces that would otherwise affect the actuation shaft 200 on the entire body of the machine. By discharging the considerable forces that transverse the actuation shafy on the cutting group 55, the bearings 40 actually prevent the actuation shaft 200 from deforming the knife 11 up to bending it and scraping on the adjacent fixed disc 3. The thrust that the actuation shaft 200 receives, is substantially due to the action exerted by the advancement of the meat to be processed. The actuation shaft 200 actually receives - from the auger - a forward thrust, towards the cutting group 55 to be more precise, which is in turn pushed backwards in the direction opposite to that of advancement of the meat. If not neutralized by the circular bearings 40, this forward thrust would be so strong to considerably deform the movable mechanical members and specifically, the knives 11 and 11' of the cutting group 55. The actuation shaft 200, when actuated by a common device or motor adapted to rotate it, being stably connected to the auger 1, receives from the auger 1 a thrust in the opposite direction with respect to the backward thrust by the auger and specifically, the actuation shaft 200 receives a forward thrust, directed towards the direction of advancement of the meat to be processed, with intensity equivalent to the pressure the meat exerts on the cutting group 55. This considerable moment is now nullified, due to the innovative technique described in the present patent application, due to the presence of at least one circular bearing 40, preferably at least one pair of circular bearings 40. Said circular bearings 40 discharge the considerable thrust, on the metal structure, i.e. on the body of the device in question. This action of lightening the workloads pressing on the actuation shaft 200, occurs due to the presence of the cylindrical projection 300 arranged on the shaft 200. These devices, the cylindrical projection 300 and the circular bearing 40 allow the actuation shaft 200 not to transfer any pressure on the cutting group 55, thus preventing the knife 11 from deforming and scraping against the fixed disc 3. Each circular bearing 40 is provided with at least one sealing device 41 of the lubricant. The auger 1 which transfers the meat at the desired speed from the hopper 70 to the cutting group 55, is provided with at least one axial bearing 99, arranged on the opposite end with respect to the end where the cutting group 55, adapted to discharge on the structure of the machine, on the machine body, the backward thrust exerted by the auger 1 during the processing of the meat.

The result deriving from the use of the metal surfaces anti-rub apparatus according to the present invention lies in the fact that the surfaces at contact, of the components involved at this stage of the production process, do not rub intensely against each other. In an alternative embodiment of the invention subject of the present industrial invention patent application, the knife 11 is inserted, in abutment, on a directly faceted special groove obtained on the terminal portion 29. Said terminal portion 29 is in turn threaded, due to the thread 28 present on its outer terminal face, on the corresponding threaded inner face of the actuation shaft 200. This simple but efficient fixing system, guarantees the entire terminal portion 29 to synergically rotate with the actuation shaft 200. In this particular embodiment of the invention, the fixed disc 3, still arranged on the axis 100 of the knife 11, is centrally traversed by the terminal portion 29, and it is maintained in position by the fixed thrust bearing 21 and by the spacers 60. The fixed disc 3 does not touch the terminal portion 29 and the knife 11, thus being disconnected from any rotary member. Practically, the present patent application has the aim of describing an innovative device for processing the meat constituted by a plurality of rotary elements such as: the actuation shaft 200, the auger 1, the knife 11 mounted in a special grooved seat directly obtained on the actuation shaft 200 and provided with a plurality of cutting blades and finely positioned due to the central support 51 adapted to lock the knives 11 and 11' and the nut 50 threaded on the threaded rod 52 adapted to lock said central support 51. On the other hand, the millimetric adjustment of the position thereof and the desired preload of the fixed disc 3 only requires acting on the connection ring nut 20 which, in turn pressing on the thrust bearing 21 and on the spacer 60, stabilizes the fixed disc exactly at the desired position. Due to the millimetric adjustment and the support action carried out by the spacers 60, the spacers 60, the thrust bearing 21 and the fixed disc 3 never come to contact with the rotary devices like the central support 51, the knife 11 and the actuation shaft 200. The circular bearings 40 installed on the cylindrical projection 300 present on the actuation shaft 200 allow stabilizing said shaft while the axial bearings 99 stabilize the auger 1. This synergic action of stabilizing the actuation shaft 200 and the auger 1 in association to the precise and adjustable positioning of the knife 11 and the corresponding fixed disc 3, allow optimizing the processing of the meat to be treated dramatically reducing the friction between the movable and fixed components. The adjustment with which the locking of the elements 50, 51 and 52 besides the elements 20 and 21 is carried out, occurs by applying a predetermined torque to said fixing elements, as a function of the size of the mincing plant and thus the workloads they are subjected to.

### Description of the preferred embodiment of the invention

Now, the invention will be described in its preferred embodiment. Said apparatus comprising the following components:
a hopper 70 for loading the frozen meat to be processed; an auger 1 adapted to transfer the substance being processed i.e. meat, from said loading hopper 70 to the various cutting components of the cutting group 55. The cutting group 55 is formed by two knives. A first knife 11, provided with a plurality of radial supports each provided with cutting blades and arranged in proximity of a fixed drawing disc 3, provided with a plurality of preferably circular holes 66 and a second knife 11' arranged in proximity of a second fixed disc 3' also provided with a plurality of circular holes 66' but having a smaller diameter with respect to the circular holes present on the fixed disc 3. The cutting group is thus constituted by two duos, each constituted by a knife and a fixed disc, all rigorously installed along the axis 100. The knife 11 is made in a single block provided with a central portion 101 in which there is obtained the faceted central seat 104 adapted to be inserted, in abutment, in the respective seat 71 present on the actuation shaft 200. From the central portion 101 there are arranged a plurality of radial supports 103, preferably four radial supports 103, all provided with at least one filed and sharp surface 102 referred to as cutting blade. Each radial support 103 of the knife 11 according to the present invention, is characterized by a decreasing thickness going from the center towards the peripheral. This reduction of thickness is outlined by the three lines present on the radial support shown in figures 8 and 9. These three independent lines, B, C and D precisely identify the corresponding three sections R1, R2 and R3 shown in Figure 9 which clearly illustrate how the section of the radial support 103 progressively reduces while moving away from the center of the knife 11.

Said cutting group 55 is adapted to perform both a first division, by cutting, of the material being processed and a first step of drawing the cut meat. Said cutting step occurs through the first knife 11, while the drawing occurs through the first fixed disc 3 and there is provided a second step of processing the meat, subsequent to the first, in which said meat is further cut by the second knife 11' and drawn by the second fixed disc 3'. The circular drawing holes, present on each fixed disc, shall have a progressively smaller diameter passing from the first 3 to the second fixed drawing disc 3'.

The two fixed discs 3 and 3' are supported by a thrust bearing 21, a connection ring nut 20, adapted to directly support the last fixed drawing disc 3'. The first fixed disc is always indirectly supported by the thrust bearing 21 and by the connection ring nut 20 but also due to the help of spacers 60. These spacers are of the solid structure, preferably metal, which stably lying on the thrust bearing 21 supported by the connection ring nut 20, maintain the fixed discs stationary, exactly at the desired position. Thus, the spacers 60 stabilize the two fixed discs by supporting them along the outer perimeter thereof, thus leaving both the circular drawing holes 66 and 66' and the large central hole adapted to house the actuation shaft 200 free. Thus said first drawing disc 3 is adapted to perform a first operation referred to as "rough cutting" of the animal meat and swine meat being processed in this specific case. The plant described in the present document is configured so that the auger 1 and the cutting device 55 rigorously develop along the central axis 100. Said fixed drawing disc 3 is peripherally maintained at the exact desired position, due to the presence of at least one spacer 60 supported by the thrust bearing 21, in turn maintained at the desired position by the connection ring nut 20, whose inner face 25 is threaded on the thread present on the outer face 26 of the cutting group 55, thus, by screwing or unscrewing said connection ring nut 20 on the corresponding thread 26, there is obtained the increase or decrease of pressure exerted on the thrust bearing 21 and thus on the fixed disc 3 and on any other fixed discs 3' present inside the cutting group 55. The first knife 11 is provided with a faceted central hole 103. Said faceted central hole 103 of the knife 11 is inserted in the corresponding faceted seat present on the terminal portion 29 of the actuation shaft 200. Said terminal portion 29 is in turn threaded, due to the thread 28, on the threaded inner face of the actuation shaft 200. The second knife support 11' is also integral with the actuation shaft 200, also being arranged on the terminal portion 29 on the special grooved seat 71, adapted to engage with the central portion of said knife 11'. Said second knife 11' is stably maintained in the desired position inside said groove by the pressure exerted, at the contact point 53, by the central support or bushing 51. The pressure exerted on the central portion of said knife 11' is in turn finely adjusted due to the use of the fixing nut 50 which is in turn adjustable and threaded due to the fixing element 52, at the terminal end 29 of the actuation shaft 200. The distance between the knife 11 and the corresponding fixed disc 3 is finely adjusted and managed due to the presence, respectively, as regards the knife 11', of the position taken by the central portion of the knife 11' in the grooved seat 71 which is stably maintained in position by the pressure exerted, at the contact point 53, by the central support or bushing 51, said bushing 51 being in turn finely adjusted and made integral with the actuation shaft 200, due to the fixing nut 50 which is in turn adjustable and threaded due to the fixing element 52 to the terminal end 29 of the actuation shaft 200, while as regards the fixed disc 3 the distance from the corresponding knife 11 is finely adjusted by at least one spacer 60 supported by the thrust bearing 21, in turn maintained in position by the connection ring nut 20, whose inner face 25 is threaded on the thread present on the outer face 26 of the cutting group 55, so that both said knife 11 and said fixed disc 3, can be finely adjusted and positioned with respect to each other at a distance such to be therebetween close but without points of contact even when the production plant is running normally.

## Claims

1. Apparatus for processing vegetables, flours and preferably for processing animal meat for the production of sausages, **characterized in that** it comprises along the central rotation axis (100), a plurality of movable components synergistically rotating along said axis (100) such as: the actuation shaft (200), the auger (1) provided with an axial bearing (99), at least one knife (11) arranged in proximity to the outlet of the meat supplied to the auger (1) and said knife (11) being provided with a central portion (101) in which a faceted central seat (104) is obtained adapted to fit into the respective seat (71) present on the actuation shaft (200) and with a plurality of radial supports (103) all provided with at least one cutting surface (102) called cutting blade and having the thickness of said radial support (103) which is progressively reduced moving away from the center of the knife (11), said knife (11) being positioned inside the cutting group (55) so that its central portion (101) and specifically its central faceted seat (104) is stably maintained in the suitable grooved seat (71), present on the actuation shaft (200), by the pressure exerted on the central portion (101) of said knife (11) and specifically at the contact point (53), by the central support or bushing (51) said pressure being adjusted by screwing the nut (50) threaded on the threaded rod (52) in turn inserted in the end part of the same actuation shaft (200), said apparatus for processing foods and meat in particular being further provided with a plurality of fixed elements, situated around said central rotation axis (100), such as a loading hopper (70), at least one first fixed disc (3) for drawing meat, stably positioned inside the cutting group (55) due to at least one spacer (60) in turn supported by the thrust bearing (21) and by the connection ring nut (20) positioned on the outlet end of the ground meat of the cutting group (55), so that the threaded inner profile (25) of said connection ring nut (20), is threaded on the corresponding thread (26) obtained on the outer face of the body of the cutting group (55) so that the screwing or unscrewing of said connection ring nut (20) directly adjusts the pressure exerted by said connection ring nut (20) on the thrust bearing (21) which in turn supports and stabilizes the fixed disc (3') and said actuation shaft (200) being provided with at least one cylindrical projection (300) arranged along said actuation shaft (200) provided with at least one circular bearing (40), preferably a pair of preloaded circular bearings (40), adapted to stabilize and discharge the forces acting on said actuation shaft (200) on the structure body (64), preventing it from deforming the knife-holder support (11), therefore, all the above mentioned devices are adapted to maintain the knife (11) and the corresponding fixed disc (3) in the predetermined position keeping a predetermined distance or pressure therebetween.

2. Apparatus for processing vegetables, flours and preferably for processing animal meat in the production of sausages, according to claim 1, **characterized in that** the knife (11) is integral with the actuation shaft (200), said actuation shaft (200) having at least one grooved seat (71) adapted to engage with the central portion (101) of said knife (11) and namely the faceted central seat (104), said knife (11) being stably maintained in the desired position inside said groove (71), by the pressure exerted, at the contact point (53), by the central support or bushing (51) in turn finely adjusted and made integral with the actuation shaft (200), due to the fixing nut (50) which is in turn adjustable and threaded due to the fixing element (52), at the terminal end itself of the actuation shaft (200).

3. Apparatus for processing vegetables, flours and preferably animal meat for the production of sausages, according to any of the preceding claims, **characterized in that** said fixed drawing disc (3) is peripherally maintained in the exact desired position, due to the presence of at least one spacer (60) supported by the thrust bearing (21), in turn maintained in the desired position by the connection ring nut (20), whose inner face (25) is threaded on the thread present on the outer face (26) of the cutting group (55), therefore, by screwing or unscrewing said connection ring nut (20) on the corresponding thread (26), the increase or decrease of the pressure exerted on the thrust bearing (21) is obtained and thus on the fixed disc (3) and on any other fixed discs (3') present inside the cutting group (55), so that they are stably tightened with a predetermined locking torque as a function of the size of the processing plant and of the food to be processed.

4. Apparatus for processing vegetables, flours and preferably for processing animal meat according to the preceding claim **characterized in that** the grooved seat (71) present on the actuation shaft (200) is shaped so as to receive the central portion (101) of the knife (11) and namely the faceted central seat (104) which is stably maintained inside said grooved seat (71) by the pressure exerted, at the contact point (53), by the central support or bushing (51) whose action is finely adjusted and made integral with the actuation shaft (200), due to the fixing nut (50) which is in turn adjustable and threaded due to the fixing element (52), at the terminal end of the actuation shaft (200), so as to stably tighten it at a predetermined tightening torque as a function of the size of the processing plant and of the food to be processed.

5. Apparatus for processing vegetables, flours and preferably animal meat for the production of sausages, according to the preceding claims wherein the pressure exerted between the knife (11) and the corresponding fixed disc (3) is finely adjusted and kept constant due to the presence, respectively, as regards the knife (11), of the position taken by the central portion (101) of the knife (11) in the grooved seat (71) which is stably maintained in position by the pressure exerted, at the contact point (53), by the central support or bushing (51), said bushing (51) being in turn finely adjusted and made integral with the actuation shaft (200), due to the fixing nut (50) which in turn is adjustable and threaded due to the fixing element (52) and thus stably tightened at the desired tension, at the terminal end of the actuation shaft (200), while as regards the fixed disc (3), the distance from the corresponding knife (11) is finely adjusted by at least one spacer (60) supported by the thrust bearing (21), in turn maintained in position by the connection ring nut (20), whose inner face (25) is threaded on the thread present on the outer face (26) of the cutting group (55), so that both said knife (11) and said fixed disc (3), can be finely adjusted and positioned with respect to each other so that even when the cutting device is operating and the knife (11) rotates, the pressure exerted by the knife (11) on the fixed disc (3) is constant.

6. Apparatus for processing vegetables, flours and preferably animal meat for the production of sausages according to all of the preceding claims, **characterized in that** the cutting group (55) is provided with a plurality of knives (11), (11')... and a plurality of fixed discs (3), (3')... interposed therebetween and all finely positioned and stabilized due to the abovementioned positioning means so as to maintain between each knife (11) and the corresponding fixed disc (3), a predetermined constant pressure.

7. Apparatus for processing vegetables, flours and preferably animal meat for the production of sausages according to the preceding claims, **characterized in that** the faceted central seat (104) of the knife (11) is inserted in the corresponding faceted seat present on the end portion (29) of the actuation shaft (200), said end portion (29) being in turn threaded, due to the thread (28), on the inner threaded face of the actuation shaft (200).

8. Apparatus for processing vegetables, flours and preferably for processing animal meat for the production of sausages according to the preceding claims, **characterized in that** the conical bearing (40), preferably the conical bearings (40), are each provided with at least one sealing device (41).

9. Apparatus for processing vegetables, flours and preferably for processing animal meat for the production of sausages according to the preceding claims, **characterized in that** the thickness of the radial support (103) decreases moving away, along the radial support (103), from the center of the knife 11 from a thickness value of 3.7 along section B, to a thickness value of 2.6 at section C, terminating with a thickness value of 1 at section D.

10. Use of the apparatus for processing vegetables, flours and preferably animal meat for the production of sausages, according to any one of the preceding claims, adapted to adjust friction and rubbing of the surfaces forming said cutting group (55) and specifically, the pressure exerted by the cutting blades of the knives (11) and the fixed drawing discs (3), in plants for producing foods and preferably cold meats/salami used for producing sausages.

## Patentansprüche

1. Vorrichtung zur Verarbeitung von Pflanzen, Mehlen und vorzugsweise zur Verarbeitung von Tierfleisch zur Erzeugung von Würsten, **dadurch gekennzeichnet, dass** sie entlang der zentralen Rotationsachse (100) eine Mehrzahl von beweglichen Komponenten, die entlang der genannten Achse (100) synergistisch rotieren, aufweist wie beispielsweise: die Antriebswelle (200), die mit einem Axiallager (99) ausgestattete Förderschnecke (1), zumindest ein Messer (11), das in der Nähe des Auslasses des der Förderschnecke (1) zugeführten Fleisches angeordnet ist, und wobei das genannte Messer (11) mit einem zentralen Teil (101), in dem ein facettierter zentraler Sitz (104) besteht, der so ausgebildet ist, dass er in den entsprechenden, auf der Antriebwelle (200) befindlichen Sitz (71) passt, und mit einer Mehrzahl radialer Träger (103) ausgestattet ist, wobei von den radialen Trägern (103) alle mit zumindest einer als Schneidklinge bezeichneten Schneidoberfläche (102) ausgestattet sind und die die Dicke des genannten radialen Trägers (103), die sich, wenn man sich vom Zentrum des Messers (11) wegbewegt, zunehmend verringert, aufweisen, wobei das genannte Messer (11) innerhalb der Schneidgruppe (55) positioniert ist, so dass sein zentraler Teil (101) und im Besonderen sein zentraler facettierter Sitz (104) durch den Druck, der durch den zentralen Träger oder die Hülse (51) auf den zentralen Teil (101) des genannten Messers (11) und im Besonderen an dem Kontaktpunkt (53) ausgeübt wird, stabil in dem auf der Antriebswelle (200) vorhandenen, geeigneten genuteten Sitz (71) gehalten wird, wobei der genannte Druck durch Schrauben der Mutter (50), die auf den mit einem Gewinde versehenen Stab (52) aufgeschraubt ist, eingestellt ist, wobei der Stab (52) wiederum in das Endteil derselben Antriebswelle (200) eingesetzt ist, wobei die genannte Vorrichtung zur Verarbeitung von Nahrungsmitteln und Fleisch ferner insbesondere mit einer Mehrzahl fixierter Elemente wie beispielsweise ein Einfülltrichter (70), zumindest eine erste fixierte Scheibe (3) zum Wolfen von Fleisch, die um die genannte zentrale Rotationsachse (100) herum angeordnet sind, ausgestattet ist, die aufgrund zumindest eines Abstandhalters (60), der wiederum durch das Widerlager (21) und durch die auf dem Auslassende für das durchgedrehte Fleisch auf der Schneidgruppe (55) gestützt wird, innerhalb der Schneidgruppe (55) stabil positioniert sind, so dass das mit einem Gewinde versehene innere Profil (25) der genannten Verbindungsringmutter (20) auf das zugehörige Gewinde (26), das auf der äußeren Fläche des Körpers der Schneidgruppe (55) besteht, aufgeschraubt ist, so dass das Aufschrauben oder Abschrauben der genannten Verbindungsringmutter (20) direkt den Druck einstellt, der durch die genannte Verbindungsringmutter (20) auf das Widerlager (21), das wiederum die fixierte Scheibe (3') und die genannte Antriebswelle (200) trägt und stabilisiert, ausgeübt wird, wobei die genannte Antriebswelle (200) mit zumindest einem zylindrischen Vorsprung (300) ausgestattet ist, der entlang der genannten Betätigungswelle (200), die mit zumindest einem umlaufenden Lager (40), vorzugsweise einem Paar von vorgespannten umlaufenden Lagern (40), das dazu ausgebildet ist, die Kräfte, die auf die genannte Antriebswelle (200) auf dem Strukturkörper (64) wirken, zu stabilisieren und abzuleiten, ausgestattet ist, wobei verhindert wird, dass sie den Träger (11) des Messerhalters deformierten, weshalb sämtliche oben genannten Vorrichtungen dazu ausgebildet sind, das Messer (11) und die zugehörige fixierte Scheibe (3) in der vorgegebenen Position zu halten, wobei ein vorgegebener Abstand oder Druck dazwischen beibehalten wird.

2. Vorrichtung zur Verarbeitung von Pflanzen, Mehlen und vorzugsweise zur Verarbeitung von Tierfleisch bei der Herstellung von Würsten gemäß Anspruch 1, **dadurch gekennzeichnet, dass** das Messer (11) integral mit der Antriebswelle (200) ausgebildet ist, wobei die genannte Antriebswelle (200) zumindest einen genuteten Sitz (71), der dazu ausgebildet ist, in den zentralen Teil (101) des genannten Messers (11) und zwar den facettierten zentralen Sitz (104) einzugreifen, aufweist, wobei das genannte Messer (11) durch den Druck, der durch den zentralen Träger oder die Hülse (51) an der Kontaktstelle (53) ausgeübt wird, stabil in der gewünschten Position in der genannten Nut (71) gehalten wird, wobei die Hülse (51) wiederum aufgrund der Fixierungsmutter an dem Terminalende der Antriebswelle (200) selbst fein eingestellt und integral mit der Antriebswelle (200) ausgebildet ist, wobei die Fixierungsmutter (50) die wiederum aufgrund des Fixierungselements (52) einstellbar und schraubbar ist.

3. Vorrichtung zur Verarbeitung von Pflanzen, Mehlen und vorzugsweise Tierfleisch für die Herstellung von Würsten gemäß einem der vorangehenden Ansprüche, **dadurch gekennzeichnet, dass** genannte die Wolfscheibe (3) durch das Vorhandensein von zumindest einem durch das Widerlager (21) getragenen Abstandhalter (60) peripher in der exakten gewünschten Position gehalten wird, wobei das Widerlager (21) wiederum durch die Verbindungsringmutter (20), deren innere Fläche (25) auf das auf der Außenfläche (26) der Schneidgruppe (55) vorliegende Gewinde aufgeschraubt ist, in der gewünschten Position gehalten wird, weshalb durch Aufschrauben oder Abschrauben der genannten Verbindungsringmutter (20) auf das entsprechende Gewinde (26) die Erhöhung oder Verringerung des Drucks, der auf das Widerlager (21) und damit auf die fixierte Scheibe (3) und auf jede andere der innerhalb der Schneidgruppe (55) vorliegenden fixierten Scheiben (3') ausgeübt wird, erhalten wird, so dass sie mit einem vorgegebenen Anzugsmoment als Funktion der Größe der Verarbeitungsanlage und der zu verarbeitenden Nahrung stabil angezogen sind.

4. Vorrichtung zur Verarbeitung von Pflanzen, Mehlen und vorzugsweise zur Verarbeitung von Tierfleisch gemäß den vorangehenden Ansprüchen, **dadurch gekennzeichnet, dass** der auf der Antriebswelle (200) befindliche genutete Sitz (71) so geformt ist, dass er den zentralen Teil (101) des Messers (11) und zwar den facettierten zentralen Sitz (104), der durch den Druck, der an der Kontaktstelle (53) durch das zentrale Lager oder die Hülse (51) ausgeübt wird, stabil in dem genannten genuteten Sitz (71) gehalten wird, aufnimmt, wobei, aufgrund der Fixierungsmutter (50), die Wirkung der Hülse (51) fein eingestellt und die Hülse (51) mit der Antriebswelle (200) integral ausgebildet ist, wobei die Fixierungsmutter (50) wiederum aufgrund des Fixierungselements (52) einstellbar und auf das Terminalende der Antriebswelle (200) aufgeschraubt ist, um sie mit einem vorgegebenen Anzugsmoment als Funktion der Größe des Verarbeitungsanlage und der zu verarbeitenden Nahrung stabil anzuziehen.

5. Vorrichtung zur Verarbeitung von Pflanzen, Mehlen und vorzugsweise Tierfleisch zur Herstellung von Würsten gemäß den vorangehenden Ansprüchen, wobei der zwischen dem Messer (11) und der zugehörigen fixierten Scheibe (3) ausgeübte Druck aufgrund des Vorhandenseins bzw., soweit es das Messer (11) betrifft, der Position, die durch den zentralen Teil (101) des Messers (11) in dem genuteten Sitz (71) eingenommen wird, fein eingestellt und konstant gehalten wird, wobei der genutete Sitz (71) durch den Druck, der an der Kontaktstelle (53) durch den zentralen Träger oder die Hülse (51) ausgeübt wird, stabil in Position gehalten wird, wobei die genannte Hülse (51) aufgrund der Fixierungsmutter (50) wiederum fein eingestellt und mit der Antriebswelle (200) integral ausgebildet ist, wobei die Fixierungsmutter (50) aufgrund des Fixierungselements (52) wiederum einstellbar und geschraubt und daher mit der gewünschten Spannung an dem Terminalende der Antriebswelle (200) stabil angezogen ist, während, soweit es die fixierte Scheibe (3) betrifft, der Abstand von dem zugehörigen Messer (11) fein eingestellt ist durch zumindest einen Abstandhalter (60), der durch das Widerlager (21) getragen wird, das wiederum durch die Verbindungsringmutter (20), deren innere Fläche (25) auf das auf der äußeren Fläche (26) der Schneidgruppe (25) vorhandene Gewinde geschraubt ist, in Position gehalten wird, so dass sowohl das genannte Messer (11) als auch die fixierte Scheibe (3) in Bezug aufeinander fein eingestellt und positioniert werden können, so dass selbst wenn die Schneidvorrichtung arbeitet und das Messer (11) rotiert, der durch das Messer (11) auf die fixierte Scheibe (3) ausgeübte Druck konstant ist.

6. Vorrichtung zur Verarbeitung von Pflanzen, Mehlen und vorzugsweise Tierfleisch zur Herstellung von Würsten gemäß allen der vorangehenden Ansprüche, **dadurch gekennzeichnet, dass** die Schneidgruppe (55) ausgestattet ist mit einer Mehrzahl von Messern (11), (11')... und einer Mehrzahl von fixierten Scheiben (3), (3') ..., die dazwischen angeordnet und aufgrund des oben erwähnten Positionierungsmitttels alle fein positioniert und stabilisiert sind, um zwischen jedem Messer (11) und der zugehörigen fixierten Scheibe (3) einen vorgegebenen konstanten Druck aufrechtzuerhalten.

7. Vorrichtung zur Verarbeitung von Pflanzen, Mehlen und vorzugsweise Tierfleisch zur Herstellung von Würsten gemäß den vorangehenden Ansprüchen, **dadurch gekennzeichnet, dass** der facettierte zentrale Sitz (104) des Messers (11) in den zugehörigen facettierten Sitz, der auf dem Endteil (29) der Antriebswelle (200) vorhanden ist, eingesetzt ist, wobei der genannte Endteil (20) wiederum aufgrund des Gewindes (28) auf die innere, mit einem Gewinde versehene Fläche der Antriebswelle (200) geschraubt ist.

8. Vorrichtung zur Verarbeitung von Pflanzen, Mehlen und vorzugsweise zur Verarbeitung von Tierfleisch zur Herstellung von Würsten gemäß den vorangehenden Ansprüchen, **dadurch gekennzeichnet, dass** von dem konischen Lager (40), vorzugsweise den konischen Lagern (40), ein jedes mit zumindest einer Dichteinrichtung (41) ausgestattet ist.

9. Vorrichtung zur Verarbeitung von Pflanzen, Mehlen und vorzugsweise zur Verarbeitung von Tierfleisch zur Herstellung von Würsten gemäß den vorangehenden Ansprüchen, **dadurch gekennzeichnet, dass** sich die Dicke des radialen Trägers (103), wenn man sich entlang des radialen Trägers (103) vom Zentrum des Messers 11 wegbewegt, von einem Dickenwert von 3,7 entlang Abschnitt B auf einen Dickenwert von 2,6 am Abschnitt C verringert und mit einem Dickenwert von 1 am Abschnitt D endet.

10. Verwendung der Vorrichtung zur Verarbeitung von Pflanzen, Mehlen und vorzugsweise Tierfleisch zur Herstellung von Würsten gemäß einem der vorangehenden Ansprüche, die dazu ausgebildet ist, die Reibung und den Abrieb der Oberflächen, die die genannte Schneidgruppe (55) bilden und, insbesondere, den durch die Schneidklingen der Messer (11) und die fixierten Wolfscheiben (3) ausgeübten Druck einzustellen, in Anlagen zum Herstellen von Nahrungsmitteln und vorzugsweise kaltem Fleisch / kalter Salami.

## Revendications

1. Appareil pour le traitement de légumes, de farines et de préférence pour le traitement de viandes animales pour la production de saucisses, **caractérisé en ce qu'**il comprend, le long de l'axe de rotation central (100), une pluralité de composants mobiles tournant de manière coopérative le long dudit axe (100), tels que : l'arbre d'actionnement (200), la vis sans fin (1) dotée d'un palier axial (99), au moins un couteau (11) agencé à proximité de la sortie de la viande fournie à la vis sans fin (1) et ledit couteau (11) étant doté d'une partie centrale (101) dans laquelle un siège central à facettes (104) est obtenu, approprié pour s'ajuster dans le siège respectif (71) présent sur l'arbre d'actionnement (200), et d'une pluralité de supports radiaux (103), tous dotés d'au moins une surface de coupe (102) dénommée lame de coupe et présentant l'épaisseur dudit support radial (103) qui se réduit progressivement en s'éloignant du centre du couteau (11), ledit couteau (11) étant positionné à l'intérieur du groupe de coupe (55) de sorte que sa partie centrale (101) et spécifiquement son siège central à facettes (104) soit maintenu stable dans le siège rainuré approprié (71) présent sur l'arbre d'actionnement (200), par la pression exercée sur la partie centrale (101) dudit couteau (11) et spécifiquement au niveau du point de contact (53), par le support ou la douille central(e) (51) ladite pression étant ajustée par le vissage de l'écrou (50) vissé sur la tige filetée (52) à son tour insérée dans la partie d'extrémité du même arbre d'actionnement (200), ledit appareil pour le traitement d'aliments et de viandes étant en particulier doté en outre d'une pluralité d'éléments fixes, disposés autour dudit axe de rotation central (100), tels qu'une trémie de chargement (70), au moins un premier disque fixe (3) pour collecter la viande, positionnés fixement à l'intérieur du groupe de coupe (55) grâce à au moins un élément d'espacement (60) à son tour supporté par le palier de butée (21) et par l'écrou de bague de liaison (20) positionnés à l'extrémité de sortie de la viande hachée du groupe de coupe (55), de sorte que le profil interne fileté (25) dudit écrou de bague de liaison (20) est vissé sur le filet correspondant (26) obtenu sur la face externe du corps du groupe de coupe (55) afin que le vissage ou dévissage dudit écrou de bague de liaison (20) ajuste directement la pression exercée par ledit écrou de bague de liaison (20) sur le palier de butée (21) qui, à son tour, supporte et stabilise le disque fixe (3'), et ledit arbre d'actionnement (200) étant doté d'au moins une saillie cylindrique (300) agencée le long dudit arbre d'actionnement (200) doté d'au moins un palier circulaire (40), de préférence d'une paire de paliers circulaires précontraints (40), appropriés pour stabiliser et évacuer les forces agissant sur ledit arbre d'actionnement (200) sur le corps de la structure (64), l'empêchant de déformer le support porte-couteau (11), par conséquent, tous les dispositifs susmentionnés sont appropriés pour maintenir le couteau (11) et le disque fixe correspondant (3) dans la position prédéterminée en maintenant une distance ou une pression prédéterminée entre ceux-ci.

2. Appareil pour le traitement de légumes, de farines et de préférence pour le traitement de viandes animales pour la production de saucisses, selon la revendication 1, **caractérisé en ce que** le couteau (11) est solidarisé à l'arbre d'actionnement (200), ledit arbre d'actionnement (200) comportant au moins un siège rainuré (71) approprié pour venir en prise avec la partie centrale (101) dudit couteau (11) et notamment avec le siège central à facettes (104), ledit couteau (11) étant maintenu stable dans la position souhaitée à l'intérieur de ladite rainure (71) par la pression exercée, au niveau du point de contact (53), par le support ou la douille central(e) (51) à son tour ajusté(e) avec précision et solidarisé(e) à l'arbre d'actionnement (200), grâce à l'écrou de fixation (50) qui est à son tour ajustable et vissé grâce à l'élément de fixation (52), au niveau de l'extrémité terminale même de l'arbre d'actionnement (200).

3. Appareil pour le traitement de légumes, de farines et de préférence de viandes animales pour la production de saucisses, selon l'une quelconque des revendications précédentes, **caractérisé en ce que** ledit disque fixe de collecte (3) est maintenu dans un sens périphérique dans la position souhaitée exacte, grâce à la présence d'au moins un élément d'espacement (60) supporté par le palier de butée (21), à son tour maintenu dans la position souhaitée par l'écrou de bague de liaison (20), dont la face interne (25) est vissée sur le filet présent sur la face externe (26) du groupe de coupe (55), ainsi, par le vissage ou le dévissage dudit écrou de bague de liaison (20) sur le filet correspondant (26), l'augmentation ou la réduction de la pression exercée sur le palier de butée (21) est obtenue, et par conséquent sur le disque fixe (3) et sur tout autre disque fixe (3') présent à l'intérieur du groupe de coupe (55), de sorte qu'ils soient serrés de manière stable avec un couple de verrouillage prédéterminé en fonction de la taille de l'installation de traitement et des aliments à traiter.

4. Appareil pour le traitement de légumes, de farines et de préférence pour le traitement de viandes animales selon la revendication précédente, **caractérisé en ce que** le siège rainuré (71) présent sur l'arbre d'actionnement (200) est façonné de façon à recevoir la partie centrale (101) du couteau (11) et notamment le siège central à facettes (104) qui est maintenu fixement à l'intérieur dudit siège rainuré (71) par la pression exercée, au niveau du point de contact (53), par le support ou la douille central(e) (51) dont l'action est ajustée avec précision et qui est solidarisé(e) à l'arbre d'actionnement (200), grâce à l'écrou de fixation (50) qui est à son tour ajustable et vissé grâce à l'élément de fixation (52), au niveau de l'extrémité terminale de l'arbre d'actionnement (200), de façon à le serrer de manière stable selon un couple de serrage prédéterminé en fonction de la taille de l'installation de traitement et des aliments à traiter.

5. Appareil pour le traitement de légumes, de farines et de préférence de viandes animales pour la production de saucisses, selon les revendications précédentes, dans lequel la pression exercée entre le couteau (11) et le disque fixe correspondant (3) est ajustée avec précision et maintenue constante grâce à la présence, respectivement, en ce que concerne le couteau (1), de la position occupée par la partie centrale (101) du couteau (11) dans le siège rainuré (71) qui est maintenue en position de manière stable par la pression exercée, au niveau du point de contact (53) par le support ou la douille central(e) (51), ladite douille (51) étant à son tour ajustée avec précision et solidarisée à l'arbre d'actionnement (200), grâce à l'écrou de fixation (50) qui est à son tour ajustable et vissé grâce à l'élément de fixation (52) et ainsi serré de manière stable à la tension souhaitée, au niveau de l'extrémité terminale de l'arbre d'actionnement (200), tandis qu'en ce qui concerne le disque fixe (3), la distance par rapport au couteau correspondant (11) est ajustée avec précision par au moins un élément d'espacement (60) supporté par le palier de butée (21), à son tour maintenu en position par l'écrou de bague de liaison (20), dont la face interne (25) est vissée sur le filet présent sur la face externe (26) du groupe de coupe (55), de sorte qu'à la fois ledit couteau (11) et ledit disque fixe (3) puissent être ajustés et positionnés avec précision l'un par rapport à l'autre, de sorte que même lorsque le dispositif de coupe fonctionne et le couteau (11) tourne, la pression exercée par le couteau (11) sur le disque fixe (3) est constante.

6. Appareil pour le traitement de légumes, de farines et de préférence de viandes animales pour la production de saucisses selon toutes les revendications précédentes, **caractérisé en ce que** le groupe de coupe (55) est doté d'une pluralité de couteaux (11), (11')..., et d'une pluralité de disques fixes (3), (3')... interposés entre ceux-ci et tous positionnés avec précision et stabilisés grâce aux moyens de positionnement susmentionnés de façon à maintenir entre chaque couteau (11) et le disque fixe correspondant (3), une pression constante prédéterminée.

7. Appareil pour le traitement de légumes, de farines et de préférence de viandes animales pour la production de saucisses selon les revendications précédentes, **caractérisé en ce que** le siège central à facettes (104) du couteau (11) est inséré dans le siège central à facettes correspondant présent sur la partie d'extrémité (29) de l'arbre d'actionnement (200), ladite partie d'extrémité (29) étant à son tour vissée, grâce au filet (28), sur la face filetée interne de l'arbre d'actionnement (200).

8. Appareil pour le traitement de légumes, de farines et de préférence pour le traitement de viandes animales pour la production de saucisses selon les revendications précédentes, **caractérisé en ce que** le palier conique (40), de préférence les paliers coniques (40), sont tous dotés d'au moins un dispositif d'étanchéité (41).

9. Appareil pour le traitement de légumes, de farines et de préférence pour le traitement de viandes animales pour la production de saucisses selon les revendications précédentes, **caractérisé en ce que** l'épaisseur du support radial (103) diminue en s'éloignant, le long du support radial (103), du centre du couteau (11), d'une valeur d'épaisseur de 3,7 le long de la section B, à une valeur d'épaisseur de 2,6 au niveau de la section C, pour finir avec une valeur d'épaisseur 1 au niveau de la section D.

10. Utilisation de l'appareil pour le traitement de légumes, de farines et de préférence de viandes animales pour la production de saucisses, selon l'une quelconque des revendications précédentes, approprié pour ajuster la friction et le frottement des surfaces formant ledit groupe de coupe (55) et spécifiquement la pression exercée par les lames de coupe des couteaux (11) et les disques de collecte fixes (3), dans des installations de production d'aliments et de préférence de viandes froides/salamis utilisées pour la production de saucisses.
